Europäisches Patentamt

European Patent Office

Office européen des brevets

(11) Veröffentlichungsnummer: **0 153 269**
**B1**

# (12) EUROPÄISCHE PATENTSCHRIFT

(45) Veröffentlichungstag der Patentschrift:
**07.10.87**

(21) Anmeldenummer: **85730002.4**

(22) Anmeldetag: **14.01.85**

(51) Int. Cl.⁴: **E 01 C 7/08**, E 01 C 11/24

(54) **Feinkorngemisch.**

(30) Priorität: **03.02.84  DE 3404271**

(43) Veröffentlichungstag der Anmeldung:
**28.08.85 Patentblatt 85/35**

(45) Bekanntmachung des Hinweises auf die Patenterteilung:
**07.10.87 Patentblatt 87/41**

(84) Benannte Vertragsstaaten:
**AT BE CH DE FR GB IT LI LU NL SE**

(56) Entgegenhaltungen:
**EP - A - 0 022 055**
**DE - A - 2 448 936**
**DE - A - 2 610 987**
**DE - A - 2 943 447**
**DE - B - 2 512 691**
**DE - B - 2 559 478**

(73) Patentinhaber: **MANNESMANN Aktiengesellschaft,
Mannesmannufer 2, D-4000 Düsseldorf 1 (DE)**

(72) Erfinder: **Boes, A., Prof.-Dr.-Ing., Schleckheimer
Strasse 39, D-5100 Aachen (DE)**
Erfinder: **Schmitt, Oskar M., Prof.-Dipl.-Ing., Zur
Fernsicht 21, D-5190 Stolberg-Zweifall (DE)**
Erfinder: **Siegmund, Werner, Ing., Oberdorfstrasse 17,
D-6901 Heiligkreuzsteinach (DE)**

(74) Vertreter: **Meissner, Peter E., Dipl.-Ing. et al, Meissner &
Meissner Patentanwälte Herbertstrasse 22,
D-1000 Berlin 33 Grunewald (DE)**

## Beschreibung

Die Erfindung betrifft ein Verfahren zur Herstellung eines Feinkorngemisches gemäss dem Oberbegriff des Patentanspruches 1.

Nach der DE-A-2 943 447 werden eine hydrophile kristalline Komponente, nämlich Natriumchlorid (NaCl) und andere mineralische Bestandteile bei Anwesenheit von Wasser unter zumindest teilweiser Lösung des Salzes und bei Anwesenheit zur Gelbildung fähiger organischer Siliziumverbindungen zu einem mörtelartigen Brei vermischt, der Brei wird anschliessend getrocknet, der getrocknete Kuchen schliesslich gemahlen.

Ähnlich wird bei einem für kunststoffgebundene Deckschichten bekannten, allerdings etwas gröberen Feinkorngemisch verfahren, indem nach der DE-B-2 512 691 in die Hohlräume gebrannter Perlite auf nassem Wege Salz eingelagert wird, um diese nach dem Trocknen ebenfalls zu mahlen.

In den bekannten gattungsgemässen Feinkorngemischen bilden die einzelnen Teilchen, von sporadischen Abweichungen abgesehen, einen innigen Verbund zwischen der hydrophilen Komponente Salz und den anderen Komponenten, der durch Rekristalisationsprodukte, wie rekristallisiertes Salz aus der wässrigen Phase und durch Gele organischer Siliziumverbindungen stabilisiert ist.

Letzere wirken auch hydrophobierend, so dass das für die Verwendung als Zusatz zu Strassendecken, insbesondere mit Salz (NaCl) als frosthemmender bzw. gefrierpunktabsenkender Zuschlagstoff vorgesehene bekannte Feinkorngemisch sich gut lagern lässt, seine Rieselfähigkeit durch die Lagerung nicht verliert und auch bei feuchter Witterung verarbeitet werden kann.

Bei allen bisher bekannten Feinkorngemischen, die in die Hohlräume eines porösen Trägerstoffes eingelagertes Salz enthalten oder an den und in den andere Metallverbindungen an- bzw. eingelagert sind, wird zur Schaffung des innigen Verbundes zwischen den Bestandteilen des Einzelkornes ein entsprechender Energieaufwand, nämlich der Aufwand der Trocknung, benötigt.

Die isolierte Verwendung von Lavamehl, Kalkmehl und dergleichen als Füller für den Strassenbau ist bekannt und unproblematisch. Die isolierte Verwendung von Salz als frosthemmender Zuschlagstoff ist nicht praktikabel. Die isolierte Verwendung von Polyurethanschaummehl — um die vorteilhafte Wirkung dieses Kunststoffes auf die Qualität einer bitumengebundenen Strassendecke zum Tragen zu bringen — ist nicht bekannt und wäre auch problematisch, weil auch herkömmlich feinzerkleinerte Hartschaumstoffe aufgrund ihres geringen Schüttgewichtes und ihres fast filzartigen Charakters grosstechnisch schlecht handhabbar und einem dosierten automatischen Transport wenig zugänglich sind.

Die bekannten über hydrophobierende Mittel in Form von organischen Siliziumverbindungen hydrophobierten und zusätzlich stabilisierten Feinkorngemische sind relativ teuer, weil einmal diese Mittel teuer sind, zum anderen der Energieaufwand der Trocknung mitgetragen werden muss.

Aufgabe der Erfindung ist es, ein Feinkorngemisch zu schaffen, das hydrophile, mineralische bzw. kristalline Komponenten enthalten kann und dennoch einen hydrophoben Charakter zeigt und das mit weniger Aufwand herstellbar ist. Es soll nicht in jedem Falle die Anwesenheit von Natriumchlorid oder eines anderen löslichen Salzes, d.h. einer wasserlöslichen Komponente erforderlich, jedoch möglich sein.

Eine Nebenaufgabe der Erfindung ist es, ein Verfahren zur Herstellung eines Feinkorngemisches aus mindestens einer hydrophilen und einer hydrophoben Komponente bereitzustellen, welches die bei den bekannten Verfahren auftretende Agglomerierung beim Trocknen und das Trocknen selbst vermeidet.

Eine weitere Nebenaufgabe der Erfindung soll es sein, Verwendungsmöglichkeiten für die erfindungsgemässen bzw. erfindungsgemäss hergestellten Produkte aufzuzeigen.

Zur Herstellung des Feinkorngemisches wird erfindungsgemäss ein Verfahren mit den Merkmalen des Patentanspruches 1 vorgeschlagen.

Auf Ausgestaltungen der Erfindung gemäss den Unteransprüchen 2 bis 5 wird verwiesen.

Das erhaltene Gemisch zeichnet sich durch hervorragende Handhabbarkeit aus, lässt sich in Silos und Säcken längerfristig lagern, sowie dosiert mit Vibrationsrinnen oder pneumatisch fördern.

Insbesondere hat aber das Gemisch durchaus erwünschte, aber völlig überraschende Eigenschaften. Überraschend ist der wasserabweisende Effekt des Feinkorngemisches selbst in Verbindung mit einer hydrophilen Komponente, die wasserlöslich ist. So verhält sich das erfindungsgemässe Gemisch der Luftfeuchtigkeit gegenüber zumindest annähernd so, wie seine hydrophobe Komponente, weitgehend unabhängig davon, ob noch andere mineralische Bestandteile im Gemisch enthalten sind, beispielsweise Quarzmehl oder mineralische und begrenzt auch organische Verunreinigungen. Je feiner die hydrophobe Komponente ist, um so deutlicher ist ihre hydrophobierende Wirkung auf das Feinkorngemisch.

Die hydrophile Komponente kann beispielsweise Lavamehl, die hydrophobe Komponente Polyurethanschaummehl sein. Auf einer glattgestrichenen Lavamehlfläche sickert ein Wassertropfen sofort ein, auf dem erfindungsgemässen Feinkorngemisch aus Lavamehl und Polyurethanschaummehl bleibt der Tropfen stehen.

Überraschend ist auch, dass sogar der hygroskopische Charakter von einigen Salzen im erfindungsgemässen Feinkorngemisch stark reduziert werden konnte. Wird als hydrophile Komponente ein wasserlöslicher Stoff eingesetzt, beispielsweise Rückstände aus dem Kalibergbau, die meist zu 50 bis 90% aus NaCl bestehen und durch sonstige Salze hygroskopisch sind, so wird im erfindungsgemässen Gemisch merkbare Hygroskopie nicht mehr zu beobachten sein. Die Erfindung zeigt also einen Weg auf, die Haldensalze aus der Kaliindustrie für eine Verwertung vorzubereiten.

Feinkorngemische, die Polyurethanhartschaum als Teil der hydrophoben Komponente enthalten, lassen sich bevorzugt als Zuschlagstoff für Kohlenwasserstoffe enthaltende Trägermedien einsetzen.

Russ lässt sich sehr gut zum Hydrophobieren von mehlfeinen hydrophilen Stoffen, aber auch zusätzlich zum Dunkelfärben von Feinkorngemischen verwenden.

Besonders bevorzugt wird gebranntes Perlitgestein als hydrophobierende Komponente. Perlite sind vulkanisches Silikatgestein mit vielen kleinen Wassereinschlüssen. Werden Perlite gebrannt, nämlich auf über 1200°C erhitzt, so expandiert dieses Gestein in Folge Wasserverdampfung zu einem federleichten Gesteinsschaum von etwa 20fachem Volumen. Derartige expandierte Perlite werden auch zum Ölaufsaugen auf Wasserflächen verwendet. Der oleophile Charakter der expandierten hydrophoben Perlite prädestiniert das Feinkorngemisch ebenfalls für einen Einsatz in Verbindung mit Kohlenwasserstoff.

Es sei noch darauf hingewiesen, dass es mit diesen gebrannten Perliten gelingt, ein Feinkorngemisch aus 94 Gew.-% NaCl und 6 Gew.-% Perlit herzustellen, in das ein Wassertropfen nicht einsickert. Es gelingt also ganz besonders gut, Salz (NaCl) trocken zu hydrophobieren.

Gemäss Anspruch 2 kann das Feinkorngemisch hydratisierten Zement enthalten.

Nachfolgend sind einige Beispiele von erfindungsgemässen Feinkorngemischen zusammengestellt.

### TABELLE

| Komponente | Gemisch Nr. | | | | | | | |
|---|---|---|---|---|---|---|---|---|
| | 1 | 2 | 3 | 4 | 5 | 6 | 7 | 8 |
| Polyurethan | 10 | 15 | 4 | — | — | 5 | — | — |
| Russ | — | 1 | — | 10 | — | 2 | — | — |
| Perlit | — | — | 15 | 5 | 20 | 5 | 28 | 6 |
| Na Cl | — | 60 | 75 | 50 | 50 | 20 | 60 | 94 |
| Begleitsalze | — | — | — | — | 15 | — | 8 | — |
| Lavamehl | 90 | 20 | 5 | — | — | — | — | — |
| Zement | — | 1 | 1 | 5 | 5 | 3 | 4 | — |
| Quarzmehl | — | 3 | — | 30 | 10 | 65 | — | — |
| in Gew.-% | 100 | 100 | 100 | 100 | 100 | 100 | 100 | 100 |

Beim Feinkorngemisch Nr. 1 wird der bekannte Füller für den Strassenbau «Lavamehl» mit einer Körnung unter 0,09 mm durch die Komponente «Polyurethan» zu einem Gemisch, welches zusätzliche bitumenfreundliche Eigenschaften aufweist.

Die Gemische Nr. 2 bis 5 zeichnen sich durch hohe Salzgehalte aus und deuten die vielfältigen Möglichkeiten der Zusamenstellung der Gemische an.

Die Gemische Nr. 5 und 7 verwenden NaCl aus der Kalisalzgewinnung.

Gemisch Nr. 8 stellt erfindungsgemäss hydrophobiertes Salz dar und könnte eine Grundmischung sein, die man auf unterschiedliche Verwendungszwecke nachträglich durch Zusätze von Lavamehl, Quarzmehl oder andere mineralische Stoffe oder organische Stoffe einstellt.

Die erfindungsgemässen Stoffe lassen sich teilweise alleine durch sorgfältiges Mischen der Komponenten herstellen, sofern sie auf das erforderliche Mass zerkleinert sind.

Diese Zerkleinerung stösst bei der hydrophoben Komponente Polyurethanhartschaum auf erhebliche Schwierigkeiten, die es im Zuge der Nebenaufgaben der Erfindung zu lösen galt.

Gemäss Anspruch 1 werden die Komponenten trocken zum Mahlen zusammengeführt und gemeinsam gemahlen, wodurch auch ein intensiver Mischeffekt erzielt wird. Ein besonders vorteilhafter Nebeneffekt des erfindungsgemässen Verfahrens besteht darin, dass sich bestimmte hydrophobe Komponenten wie beispielsweise Polyurethanhartschaum erst wirkungsvoll auf das erforderliche Mass zerkleinern lassen. Die mineralische hydrophile Komponente wirkt, selbst wenn sie von vornherein schon fein genug wäre, als Zerkleinerungshilfe.

Wird entsprechend Anspruch 2 dem Aufgabegut Zement zugesetzt, so wird bei der Zerkleinerung freiwerdendes Kristallwasser oder eine geringe Oberflächenrestfeuchte der Komponenten abgefangen und durch Hydratisieren des Zementes gebunden. Technisch trockene Produkte sind nämlich meist nicht absolut frei von Wasser. So werden natürlich nur geringe Zementzusätze benötigt, in Ausnahmefällen können es bis zu 5% sein.

Die Massnahmen gemäss Anspruch 3 empfehlen sich, wenn Polyurethanhartschaum eingesetzt wird; bei Perliten können sie zweckmässig sein. Polyurethanhartschaumstoff hat, selbst wenn er auf unter 1 mm vorzerkleinert ist, ein sehr grosses Schüttvolumen, sein spezifisches Schüttgewicht ist sehr klein. Beim Mahlen zusammen mit einer mineralischen Komponente sackt dieses Schüttvolumen zusammen. Man gibt also den Polyurethanschaum nach und nach der jeweils gemahlenen Teilcharge zu.

Nach Patentanspruch 4 wird zweistufig gemahlen, um in einer leistungsfähigen Schlagmühle eine schnelle Durchmischung und Vorzerkleinerung und in der nachgeschalteten Schwingmühle einen hohen Feinheitsgrad zu erreichen.

Erfindungsgemäss hergestellte Gemische sind etwas intensiver in ihrer hydrophobierenden Wirkung als einfache Mischungen der Komponenten gleicher Körnung.

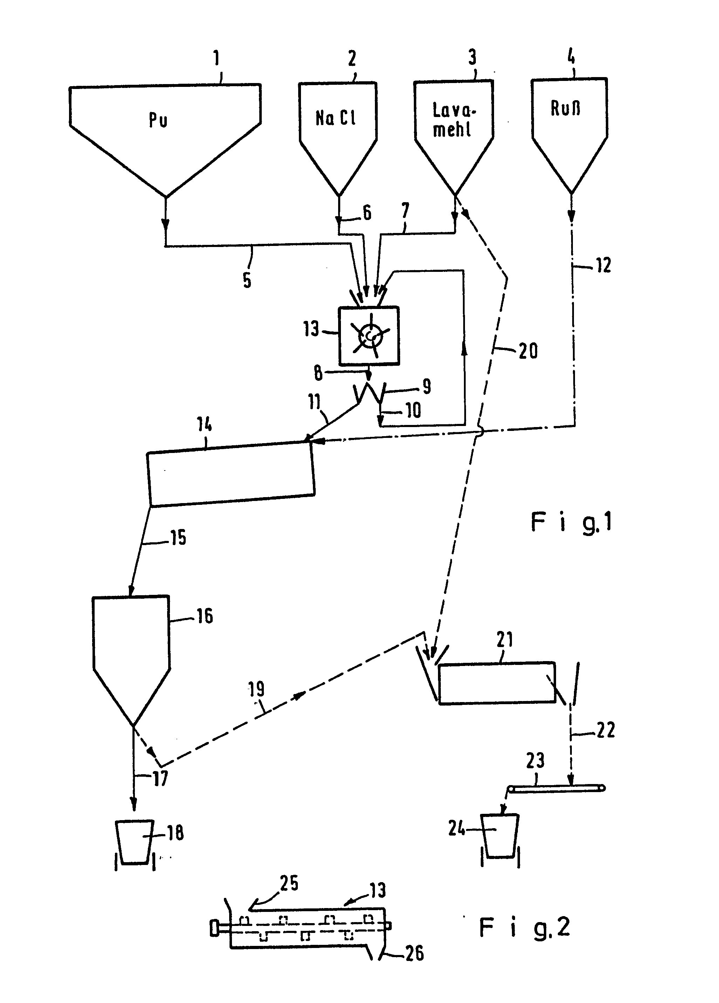

Die beigefügte Abbildung Fig. 1 zeigt in schematischer Darstellung eine Anlage zur Ausübung des erfindungsgemässen Verfahrens.

Diese besteht im wesentlichen aus mehreren Vorratsbehältern 1, 2, 3, 4, einer schnellaufenden Schlagmühle 13, einer Kugelmühle 14, einem Versandsilo 16, einem Mischer 21 und einem Verladeband 23.

Vorzerkleinerter Polyurethanhartschaumstoff (PU) wird dem Vorratsbehälter 1 entnommen und zusammen mit Salz (NaCl) aus dem Vorratsbehälter 2 und Lavamehl aus dem Vorratsbehälter 3 entsprechend den Fliesslinien 5, 6 und 7 der Schlagmühle 13 kontinuierlich zugeführt und dort zerkleinert. Ein Teil des Austrages 8 der Schlagmühle 13 wird über eine Trennvorrichtung 9 abgezweigt und im Sinne einer Fliesslinie 10 zur Aufgabeseite der Schlagmühle 13 zurückgeführt. Der Rest des Austrages 8, der gewichtsmässig den über 5, 6 und 7 zufliessenden Mengen entspricht, wird entsprechend einem Pfeil 11 der Kugelmühle 14 aufgegeben, deren Austrag dem Versandsilo 15 zufliesst.

Das im Versandsilo gelagerte Gemisch enthält nach diesem ersten Verfahrensschema Polyurethan, Salz und Lavamehl in bestimmter vorgegebener Zusammensetzung und kann über eine angedeutete Einrichtung 17 auf einen LKV 18 verladen werden.

Nach einem zweiten, die strichpunktierte Linie 12 einbeziehenden Verfahrensschema wird der Kugelmühle aus dem Vorratsbehälter 4 zusätzlich Russ zugesetzt.

Ein drittes die Fliesslinie 5, 6 und 7, sowie die gestrichelten Linien 19 und 20 einbeziehendes Verfahrensschema sieht vor, dass das im Verladesilo 16 enthaltene Grundgemisch entsprechend der gestrichelten Linie 19 zusammen mit Lavamehl entsprechend der gestrichelten Linie 20 dem Mischer 21 aufgegeben wird. Der Austrag 22 des Mischers 21 kann über einen weiteren LKW 24 abtransportiert werden. Ein derartiges Vorgehen kann angebracht sein, wenn man den gesamten Füller einer Strassendeckenmischung zusammen mit dem Gemisch gleichmässig in die Mischtrommel einblasen will.

Die Abbildung Fig. 2 zeigt eine vorteilhafte Ausbildung der Schlagmühle 13, die ein im Verhältnis zum Rotordurchmesser langgestrecktes Gehäuse hat, an dessen einem Ende die Aufgabeöffnung und an dessem anderen Ende die Austragsöffnung angeordnet ist. Es lässt sich durch diese Gestaltung die Verweilzeit des Zerkleinerungsgutes in der Schlagmühle mit zentralen Ein- und Auslauf erhöhen.

Weiterhin befasst sich die Erfindung mit der Verwendung der Feinkorngemische in den Ansprüchen 6 bis 8.

Erfindungsgemässer Verwendungszweck ist es, die Feinkorngemische als Zuschlagstoffe einzusetzen, bevorzugt in Deckschichten von Strassen- und Landebahnen, die bitumen- oder asphaltgebunden sind. Hier wirken sie wie die gattungsgemässen Gemische, vermögen aber eine wesentliche breitere Palette in der Variation der Komponenten bereitzustellen.

Für die Bitumenbeschichtung von Rohren können salzfreie Feinkorngemische eingesetzt werden, die als Komponenten Polyurethan, Perlite und Quarzmehl enthalten. Diese eignen sich auch als Zusatz zu Bitumenanstrichen von beispielsweise mit Teerpappe gedeckten Dächern.

Zur Erfüllung des Verwendungszweckes nach Anspruch 6 wird das Feinkorngemisch, beispielsweise ein Gemisch entsprechend Nr. 1, Nr. 3 oder Nr. 6 der Tabelle, gleichzeitig als teilweiser Ersatz des Füllers in die heisse Mischtrommel in die dort entstehende bitumen- oder asphalthaltige Strassendeckenmischung eingebracht, um neben Lavamehl auch Polyurethan einzubringen oder um durch Salz später eine gefrierpunktabsenkende Wirkung der Strassendecke zu erzielen.

Polyurethan macht die Strassendecke fester und belastungsfähiger, während Salz auch das Wärmespeicherverhalten der Mischung (vor ihrer Einbringung als Strassendecke) wie der Strassendecke selbst erheblich verbessert. Die hydrophobe Eigenschaft der Feinkorngemische und die oleophile Eigenschaft der entsprechenden Komponenten verhindert die gefürchtete Nesterbildung in der Strassendecke.

Es sei abschliessend noch erwähnt, dass es zweckmässig ist wenn ein hoher Anteil der Körnung unter 0,02 mm liegt.

Der in Anspruch 8 niedergelegte Verwendungszweck zeigt einen Weg auf, Abraumsalze bzw. Rückstände aus der Kalisalzgewinnung nützlich zu verwerten.

Die Erfindung kann auch helfen, das Problem der Deponie oder Verbrennung von Hartschaumstoffabfällen zu lösen.

Stellt man mit umweltneutralen Mineralien, wie Sand und dergleichen enthaltende Mischungen her, so kann das Gemisch wie Feinsand deponiert werden; es wird nur ein Bruchteil des vorherigen Deponieraumes benötigt.

**Patentansprüche**

1. Verfahren zum Herstellen eines hydrophobierende Eigenschaften aufweisenden Feinkorngemisches mit im wesentlichen unter 0,2 mm, vorzugsweise unter 0,1 mm liegender Körnung, welches statistisch gleichmässig auf das Feinkorngemisch verteilt mindestens eine mineralische hydrophile Komponente und mindestens eine hydrophobe wasserunlösliche Komponente enthält, dadurch gekennzeichnet, dass die hydrophile Komponente, die von mindestens einem Salz und/oder Lavamehl und/oder Quarzmehl gebildet ist, einerseits und die hydrophobe wasserunlösliche Komponente, die von Polyurethanschaummehl und/oder Russ und/oder gebrannten Perliten gebildet ist, andererseits aus getrennter Bevorratung entnommen und trocken zum gemeinsamen Mahlen zusammengeführt werden, wobei — bezogen auf den Anteil der hydrophilen Komponente — 5 bis 75 Gew.-% der hydrophoben wasserunlöslichen Komponente enthalten sind, und dass das Feinkorngemisch frei von nach dem Zusammenführen der Komponenten entstandenen Rekristallisationsprodukten oder Gelen ist.

2. Verfahren nach Anspruch 1, dadurch gekennzeichnet, dass dem Aufgabegut bezogen auf die hydrophile Komponente 0 bis 5% Zement zugesetzt wird.

3. Verfahren nach einem der Ansprüche 1 und 2, wobei chargenweise gemahlen wird, dadurch gekennzeichnet, dass der Mahlvorgang mit einer Teilmenge der hydrophoben wasserunlöslichen Komponente und der Gesamtmenge der mineralischen Komponente begonnen und in einem ersten Mahlabschnitt nur diese Teilcharge gemahlen wird, worauf die Restmenge der hydrophoben wasserunlöslichen Komponente gegebenenfalls in mehreren weiteren Mahlabschnitten mit der vorgemahlenen Teilcharge vereinigt und die Gesamtcharge schliesslich fertiggemahlen wird.

4. Verfahren nach einem der Ansprüche 1 bis 3, dadurch gekennzeichnet, dass zweistufig gemahlen wird, wobei in der ersten Mahlstufe eine hochtourige Rotormühle, in der zweiten Mahlstufe eine zerreibend wirkende Schwingmühle eingesetzt wird.

5. Verfahren nach einem der Ansprüche 1 bis 4, dadurch gekennzeichnet, dass dem Mahlvorgang als Aufgabegut eine wasserlösliche Komponente, die 50 bis 100 Gew.-% Natriumchlorid enthält, und die hydrophobe wasserunlösliche Komponente jeweils für sich vorzerkleinert aufgegeben werden.

6. Verwendung eines Feinkorngemisches mit einer Körnung unter 0,1 mm, welches nach einem der Ansprüche 1 bis 5 hergestellt ist und aus

A 20 - 70 Gew.-% NaCl  
B 5 - 50 Gew.-% Lavamehl und/oder Quarzmehl  
C 1 - 10 Gew.-% gebrannten hydrophoben Perliten  
D 1 - 10 Gew.-% Polyurethanhartschaum  
E 0 - 2 Gew.-% Russ

und herstellungsbedingten Verunreinigungen besteht, wobei die Summe der Anteile C + D + E gleich 5-75 Gew.-% bezogen auf die Summe der Anteile A + B ist als Zuschlagstoff für bitumen- oder asphaltgebundene Schichten, insbesondere für Deckschichten von Strassen, Gehwegen, Brücken und Landebahnen.

7. Verwendung eines Feinkorngemisches, welches nach einem der Ansprüche 1 bis 5 hergestellt ist und aus

30 - 60 Gew.-Teil NaCl  
10 - 30 Gew.-Teil Lavamehl und/oder Quarzmehl  
2 - 6 Gew.-Teil gebrannten, hydrophoben Perliten  
3 - 5 Gew.-Teil Polyurethanhartschaum

besteht, für Deckschichten, in denen bezogen auf die gesamte Deckschicht neben den sonstigen Zuschlagstoffen, wie Split und Füller und neben dem Bindemittelanteil, 2 bis 7 Gew.-% des Feinkorngemisches enthalten sind.

8. Verwendung eines Feinkorngemisches für den Zweck nach Anspruch 6 oder 7, mit einer Körnung im wesentlichen unter 0,2 mm, vorzugsweise unter 0,1 mm, welches nach einem der Ansprüche 1 bis 5 hergestellt ist und aus

20 - 80 Gew.-% NaCl-haltigem Abfallsalz der Kaligewinnung  
1 - 20 Gew.-% gebrannten, hydrophoben Perliten  
1 - 10 Gew.-% Polyurethanhartschaum  
0 - 5 Gew.-% Russ  
0 - 50 Gew.-% Gesteinsmehl  
1 - 5 Gew.-% hydratisiertem Zement

und herstellungsbedingten Verunreinigungen besteht, und bei dem die hydrophoben Komponenten 5-75 Gew.-% der hydrophilen Komponenten ausmachen.

## Claims

1. Method for the production of a fine grain mixture, having water-repellent-making properties, with a grain size of essentially below 0.2 mm, preferably below 0.1 mm, which statistically evenly distributed onto the fine grain mixture contains at least one mineral hydrophilic component and at least one hydrophobic component which is insoluble in water, characterized in that the hydrophilic component, which is formed from at least one salt and/or lava powder and/or quartz powder, on the one hand and the hydrophobic component, which is insoluble in water and is formed from polyurethane foam powder and/or soot and/or burnt perlites, on the other hand are removed from a separate supply, and are brought together dry for common grinding, in which — in relation to the proportion of the hydrophilic component — 5 to 75% by weight of the hydrophobic component, which is insoluble in water, are contained, and that the fine grain mixture is free from recrystallization products or gels which have arisen after the bringing together of the components.

2. Method according to Claim 1, characterized in that 0 to 5% cement in relation to the hydrophilic component is added to the charging material.

3. Method according to one of Claims 1 and 2, in which grinding takes place in charges, characterized in that the grinding process is begun with a partial quantity of the hydrophobic component which is insoluble in water and the total quantity of the mineral component, and in a first grinding section only this partial charge is ground, whereupon the remaining quantity of the hydrophobic component which is insoluble in water is, if necessary, united in several further grinding sections with the pre-ground partial charge and the total charge is finally finish-ground.

4. Method according to one of Claims 1 to 3, characterized in that grinding takes place on two stages, whereby in the first grinding stage a high speed rotor mill is used, and in the second grinding stage a ball mill is used which has a pulverizing action.

5. Method according to one of Claims 1 to 4, characterized in that as charging material a watersoluble component, which contains 50 to 100% by weight sodium chloride, and the hydrophobic component, which is insoluble in water, are charged to the grinding process, in each case pre-comminuted separately.

6. Use of a fine grain mixture with a grain size below 0.1 mm, which is produced according to one of Claims 1 to 5 and consists of

A  20 - 70%-wt.  NaCl
B  5 - 50%-wt.  lava powder and/or quartz powder
C  1 - 10%-wt.  burnt hydrophobic perlites
D  1 - 10%-wt.  polyurethane hard foam
E  0 - 2%-wt.  soot

and impurities conditional upon manufacture, whereby the total of constituents C + D + E is equal to 5-75% by weight in relation to the total of constituents A + B, as additive for bitumen- or asphalt bonded layers, in particular for cover layers of roads, footpaths, bridges and landing strips.

7. Use of a fine grain mixture, which is produced according to one of Claims 1 to 5 and consists of

30 - 60  parts by weight NaCl
10 - 30  parts by weight lava powder and/or quartz powder
2 - 6  parts by weight burnt hydrophobic perlites
3 - 5  parts by weight polyurethane hard foam

for cover layers, in which in relation to the entire cover layer in addition to the other additive substances such as chippings and filler and in addition to the binding agent quota, 2 to 7%-wt. of the fine grain mixture are contained.

8. Use of a fine grain mixture for the purpose according to Claim 6 or 7, with a grain size essentially below 0.2 mm, preferably below 0.1 mm, which is produced according to one of Claims 1 to 5 and consists of

20 - 80%-wt.  waste salt of potassium recovery containing NaCl,
1 - 20%-wt.  burnt, hydrophobic perlites
1 - 10%-wt.  polyurethane hard foam
0 - 5%-wt.  soot
0 - 50%-wt.  rock flour
1 - 5%-wt.  hydratized cement

and impurities conditional upon manufacture, and in which the hydrophobic components total 5-75%-wt. of the hydrophilic components.

**Revendications**

1. Procédé pour réaliser un mélange à grains fins présentant des propriétés hydrophobes, ayant une granulométrie généralement inférieure à 0,2 mm, de préférence inférieure à 0,1 mm, lequel comporte, de façon statistiquement uniformément répartie dans le mélange à grains fins, au moins un composant minéral hydrophile et au moins un composant hydrophobe insoluble dans l'eau, caractérisé en ce que le composant hydrophile, qui est formé d'au moins un sel et/ou de poudre de lave et/ou de poudre de quartz, d'une part, et le composant hydrophobe insoluble dans l'eau, qui est formé d'une poudre de mousse de polyuréthane et/ou de noir de carbone et/ou de perlites calcinées, d'autre part, sont retirés de stockages séparés et rassemblés à l'état sec pour être réduits en poudre ensemble, 5 à 75% en poids du composant hydrophobe insoluble dans l'eau étant présents, en se rapportant à la portion du composant hydrophile, et en se que le mélange à grains fins est dépourvu de produits de recristallisation ou de gels se formant après la réunion des composants.

2. Procédé selon la revendication 1, caractérisé en ce que 0 à 5% de ciment sont ajoutés à la matière de chargement en se basant sur le composant hydrophile.

3. Procédé selon l'une des revendications 1 et 2, dans lequel le broyage est réalisé de façon discontinue, caractérisé en ce que l'on commence le broyage avec une quantité partielle du composant hydrophobe insoluble dans l'eau et la quantité totale du composant minéral et seule cette charge partielle est broyée dans une première étape de broyage, la quantité restante du composant hydrophobe insoluble dans l'eau étant purifiée, le cas échéant, dans plusieurs autres sections de broyage avec la charge partielle prébroyée, et, la charge totale étant, enfin, complètement broyée.

4. Procédé selon l'une des revendications 1 à 3, caractérisé en ce que le broyage est réalisé en deux étapes, en utilisant, dans la première étape de broyage, un broyeur rotatif à vitesse élevée, et dans la seconde étape de broyage, un broyeur oscillant agissant pour pulvériser.

5. Procédé selon l'une des revendications 1 à 4, caractérisé en ce que, dans le processus de broyage, en tant que matière de chargement, sont chargés un composant soluble dans l'eau, qui comporte de 50 à 100% en poids de chlorure de sodium, et le composant hydrophobe insoluble dans l'eau, à chaque fois préalablement fragmentés.

6. Application d'un mélange à grains fins ayant une granulométrie inférieure à 0,1 mm, lequel est réalisé selon l'une des revendications 1 à 5, et est constitué de:

A  20 - 70%  en poids de chlorure de sodium;
B  5 - 50%  en poids de poudre de lave et/ou de poudre de quartz;
C  1 - 10%  en poids de perlites hydrophobes calcinées;
D  1 - 10%  en poids de mousse dure de polyuréthane;
E  0 - 2%  en poids de noir de carbone;

et d'impuretés dépendant du procédé de réalisation, la somme des portions C + D + E étant égale à 5-75% en poids en se basant sur la somme des portions A + B, comme additif pour des couches liées par de l'asphalte ou du bitume, en particulier des couches de revêtement de rues, de trottoirs, de ponts et de pistes d'atterrissage.

7. Application d'un mélange à grains fins, lequel est réalisé selon l'une des recendications 1 à 5 et est constitué de:

30 - 60%  en poids de chlorure de sodium;
10 - 30%  en poids de poudre de lave et/ou de poudre de quartz;
2 - 6%  en poids de perlites hydrophobes calcinées;
3 - 5%  en poids de mousse dure de polyuréthane,

pour des revêtements, dans lesquels, en se basant sur le poids total du revêtement , à côté d'additifs quelconques, comme des gravillons et des charges, et à côté de la portion de milieu de liaison, sont contenus 2 à 7% en poids du mélange à grains fins.

8. Application d'un mélange à grains fins dans le but indiqué dans la revendication 6 ou 7, ayant une granulométrie généralement inférieure à 0,2 mm, de préférence inférieure à 0,1 mm, lequel est réalisé selon l'une des revendications 1 à 5 et est constitué de:

20 - 80% en poids de déchets de sel de l'exploitation de la potasse contenant du chlorure de sodium;

1 - 20% en poids de perlites hydrophobes calcinés;

1 - 10% en poids de mousse dure de polyuréthane;

0 - 5% en poids de noir de carbone;

0 - 50% en poids de poudre de roches;

1 - 5% en poids de ciment hydraté;

et des impuretés dépendant de la réalisation, et dans lequel les composants hydrophobes constituent 5-75% en poids des composants hydrophiles.

F i g.1

F i g.2